# EUROPEAN PATENT APPLICATION

(11) **EP 4 467 008 A1**
(43) Date of publication of application: **27.11.2024**
(21) Application number: 22920790.7
(22) Date of filing: 24.11.2022
(51) Int. Cl.: A23P 20/20, A23P 20/25, A23P 30/00

(54) **DUMPLING STUFFING FILLING DEVICE AND AUTOMATIC PRODUCTION SYSTEM INCLUDING SAME**

(30) Priority: 17.01.2022 KR 20220006853
(71) Applicant: CJ CHEILJEDANG CORPORATION, Seoul 04560 (KR)
(72) Inventor: KIM, Sang Cheol, Asan-si Chungcheongnam-do 31495 (KR); BAE, Soon Suk, Asan-si Chungcheongnam-do 31487 (KR); LEE, Yong Gyu, Cheonan-si Chungcheongnam-do 31163 (KR); JANG, Bong Jin, Seoul 04560 (KR); JUNG, Da Woon, Seoul 04560 (KR); KIM, Se Jin, Seoul 04560 (KR)
(74) Representative: Cabinet Laurent & Charras
(86) International application number: PCT/KR2022/018689
(87) International publication number: WO 2023/136461

(57) **Abstract**

Disclosed are a dumpling stuffing filling device and an automatic production system including same. A dumpling stuffing filling device according to an embodiment of the present invention comprises: a dumpling stuffing storage and supply hopper for storing and supplying dumpling stuffing to a plurality of dumpling wrappers; a dumpling stuffing supply rotor unit which is disposed at one side of the dumpling stuffing storage and supply hopper and supplies a fixed quantity of dumpling stuffing supplied from the dumpling stuffing storage and supply hopper; and a plurality of dumpling stuffing delivery units which have one side provided to be connected to the dumpling stuffing supply rotor unit and deliver the fixed quantity of dumpling stuffing supplied from the dumpling stuffing storage and supply hopper; and a dumpling stuffing discharge unit which is disposed adjacent to the dumpling stuffing supply rotor unit and is provided so that the other side of each of the dumpling stuffing delivery units is connected thereto, and discharges the dumpling stuffing delivered from the dumpling stuffing delivery units toward the dumpling wrappers in a non-contact manner.

## Description

### [Technical Field]

The present disclosure relates to a dumpling stuffing filling device and an automatic dumpling manufacturing system including the same, and more particularly, to a dumpling stuffing filling device that may continuously supply and fill dumpling stuffing while not contacting a dumpling wrapper, and thus, may significantly increase productivity compared to a conventional one while preventing tipping of the dumpling wrapper, and may guide the dumpling stuffing such that it falls at a predetermined location, and thus may reduce seal and shape defects, and an automatic dumpling manufacturing system including the same.

### [Background Art]

Dumpling is a food made by making dumpling stuffing with vegetables or meat as main ingredients and then surrounding the dumpling stuffing with a dumpling wrapper. Dumpling wrappers are usually made from wheat flour, but other additives may be added for health or flavor reasons.

In the past, dumplings were made by hand, but due to limitations in manual work, the recent trend is to mass-produce dumplings through a series of dumpling forming systems (or equipment).

For reference, the dumpling forming system refers to a combination of devices that individually perform processes, such as a process of making dumpling stuffing, a process of making a dumpling wrapper, a process of transporting them, a process of filling the dumpling stuffing into the dumpling wrapper, a process of joining the dumpling wrapper filled with dumpling stuffing, a process of inspecting the manufactured product, a process of packaging the product.

Meanwhile, the process of filling the dumpling wrapper with dumpling stuffing may be performed through a so-called dumpling stuffing filling device among the devices that perform these various processes.

Existing conventional dumpling stuffing filling devices take a rotary type. In this conventional rotary type dumpling stuffing filling method, when the dumpling stuffing falls due to a piston, the piston and the dumpling stuffing directly contact the dumpling wrapper when the dumpling stuffing is supplied.

However, in the conventional technology, not only is productivity low due to structural or methodological limitations, but the tipping of the dumpling wrapper may occur because the method uses a piston to contact and press the dumpling wrapper, there is a high incidence of seal and shape defects because the dumpling stuffing does not fall in the predetermined position, piston contamination is significant due to water leakage due to structural irregularities in the piston area, and a link-type chain drive structure is complex and rusted.

### [Disclosure]

### [Technical Problem]

An aspect of the present disclosure provides a dumpling stuffing filling device that may continuously supply and fill dumpling stuffing while not contacting a dumpling wrapper, and thus, may significantly increase productivity compared to a conventional one while preventing tipping of the dumpling wrapper, and may guide the dumpling stuffing such that it falls at a predetermined location, and thus may reduce seal and shape defects, and an automatic dumpling manufacturing system including the same.

### [Technical Solution]

### [Advantageous Effects]

According to the present disclosure, dumpling stuffing may be continuously supplied and filled while not contacting the dumpling wrapper, and thus, productivity may be significantly increased compared to a conventional one while tipping of the dumpling wrapper is prevented, and the dumpling stuffing may be guided such that it falls at a predetermined location, and thus seal and shape defects may be reduced.

### [Description of Drawings]

FIG. 1 is a schematic diagram of an automatic dumpling manufacturing system according to an embodiment of the present disclosure.
FIG. 2 is a perspective view of a dumpling stuffing filling device according to an embodiment of the present disclosure.
FIGS. 3 and 4 are views illustrating FIG. 2 at different angles.
FIG. 5 is a view, in which some components are removed from FIG. 3.
FIG. 6 is an enlarged view of area "A" of FIG. 5.
FIG. 7 is a rear view of FIG. 5.
FIG. 8 is a bottom view of FIG. 7.
FIG. 9 is an enlarged view of area "B" in FIG. 8.
FIG. 10 is a front view of FIG. 7.
FIG. 11 is a perspective view of a dumpling stuffing mixing/supply unit.
FIG. 12 is an excerpt view of a main part of FIG. 2 for illustrating areas of a dumpling stuffing supply rotor unit and a dumpling stuffing discharge unit.
FIG. 13 is a view, in which the remaining areas excluding a cam in FIG. 12 are processed with dotted lines.
FIG. 14 is an excerpt view of a main part of FIG. 12 for illustrating the area of the dumpling stuffing discharge unit.
FIG. 15 is a control block diagram of a dumpling stuffing filling device according to an embodiment of the present disclosure.

### [Mode for Invention]

According to an aspect of the present disclosure, a dumpling stuffing filling device may include a dumpling stuffing storage and supply hopper that stores and supply dumpling stuffing that is to be supplied to a plurality of dumpling wrappers, a dumpling stuffing supply rotor unit disposed on one side of the dumpling stuffing storage and supply hopper, and that supplies a predetermined quantity of the dumpling stuffing supplied from the dumpling stuffing storage and supply hopper, a plurality of dumpling stuffing delivery units, one side of which is connected to the dumpling stuffing supply rotor unit, and that delivers the predetermined quantity of the dumpling stuffing supplied from the dumpling stuffing supply rotor unit, and a dumpling stuffing discharge unit disposed adjacent to the dumpling stuffing supply rotor unit, to which an opposite side of the dumpling stuffing delivery unit is connected, and that discharges the dumpling stuffing delivered from the dumpling stuffing delivery unit toward the dumpling wrappers in a non-contact manner.

The dumpling stuffing supply rotor unit may include a common driving motor for synchronously driving the dumpling stuffing supply rotor unit and the dumpling stuffing discharge unit in common to discharge the dumpling stuffing toward the dumpling wrappers by the predetermined quantity and at predetermined locations.

The common driving motor may be a servo motor, and the dumpling stuffing supply rotor unit may further include a common rotating shaft connected to the common driving motor and being rotated by a driving force of the common driving motor.

The dumpling stuffing supply rotor unit may include a rotor unit body connected to a lower portion of the dumpling stuffing storage and supply hopper, and that stores the predetermined quantity of the dumpling stuffing falling from the dumpling stuffing storage and supply hopper, a rotor shaft, one side of which is disposed in the rotor unit body, an opposite side of which is exposed to an outside of the rotor unit body, and that causes the dumpling stuffing to fall from the dumpling stuffing storage and supply hopper into the rotor unit body by the predetermined quantity while being rotated, a dumpling stuffing pusher provided on one side of the rotor unit body, and that pushes the dumpling stuffing in the rotor unit body to the dumpling stuffing delivery unit, and a link type motion driving body connected to the common rotating shaft, the rotor shaft, and the dumpling stuffing pusher in a link manner, and that transmits a rotation motion of the common rotating shaft as a rotation or pushing motion of the rotor shaft and the dumpling stuffing pusher.

A cam may be integrally coupled to the common rotating shaft, and the link type motion driving body may be connected to the cam to interlock with rotation of the cam.

The dumpling stuffing discharge unit may include a dumpling stuffing discharge plate including a plurality of dumpling stuffing discharge holes, from which the dumpling stuffing is discharged, a discharge plate support member that detachably supports the dumpling stuffing discharge plate, a plurality of pistons provided at an upper portion of the dumpling stuffing discharge plate to be driven up and down, and that causes the dumpling stuffing delivered from the dumpling stuffing delivery unit to fall through the dumpling stuffing discharge hole, a piston support up/down slider that integrally supports the plurality of pistons, and is driven up and down together with the pistons, and a pair of motion transmitting parts connected to the common rotating shaft and the piston support up/down slider on opposite sides of the common rotating shaft, respectively, and that transmits a rotation motion of the common rotating shaft as a vertical up/down motion of the piston support up/down slider.

The pair of motion transmitting parts may have the same structure.

Each of the pair of motion transmitting parts may include a driving pulley coupled to the common rotating shaft, and being rotated with the common rotating shaft, a driven pulley disposed to be spaced apart from the driving pulley, a belt connecting the driving pulley and the driven pulley, a pulley shaft shaft-coupled to a rotation center of the driven pulley, a shaft boss coupled to the pulley shaft, a boss rotating plate having an area being larger than that of the shaft boss, and coupled to the shaft boss to be rotated together with the shaft boss, and a link member, one side of which is rotatably coupled to an eccentric location being eccentric to one side from a center of the boss rotating plate, an opposite side of which is rotatably coupled to the piston support up/down slider, and that transmits a rotation motion of the boss rotating plate as an up/down motion of the piston support up/down slider.

Each of the pair of motion transmitting parts may further include a tension guide connected to the belt and that guides the belt such that the belt is tensioned.

The dumpling stuffing discharge unit may further include a plurality of up/down guides connected to the discharge plate support member and the piston support up/down slider, and that guides an up/down motion of the piston support up/down slider.

The dumpling stuffing discharge unit may further include a plurality of elastic members connected to the piston support up/down slider, and that provides an elastic force for returning the piston support up/down slider to an original location.

A plurality of dumpling stuffing storage and supply hoppers may be provided, and a dumpling stuffing mixing/supply unit that causes the dumpling stuffing in the dumpling stuffing storage and supply hopper to fall to be supplied while being mixed may be provided in each of the dumpling stuffing storage and supply hopper.

The dumpling stuffing mixing/supplying unit may include a mixing shaft rotatably disposed in the dumpling stuffing storage and supply hopper, a spiral wing part connected to a lower area of the mixing shaft, and that causes the dumpling stuffing in the dumpling stuffing storage and supply hopper to fall while being mixed, and a shaft rotation driving part provided on an outside of the dumpling stuffing storage and supply hopper, connected to the mixing shaft, and that rotates the mixing shaft.

The dumpling stuffing mixing/supplying unit may further include a spattering preventing plate disposed at an upper portion of the dumpling stuffing storage and supply hopper, and that prevents the dumpling stuffing in the dumpling stuffing storage and supply hopper from spattering, and a nonlinear mixing bar connected to the mixing shaft in the dumpling stuffing storage and supply hopper, and that mixes the dumpling stuffing in the dumpling stuffing storage and supply hopper while being rotated together with the mixing shaft when the mixing shaft is rotated.

The dumpling stuffing filling device may further include a device controller that controls operations of the dumpling stuffing mixing/supply unit, the dumpling stuffing supply rotor unit, and the dumpling stuffing discharge unit such that the dumpling stuffing mixing/supply unit, the dumpling stuffing supply rotor unit, and the dumpling stuffing discharge unit continuously supply and fill the dumpling stuffing while not contacting the dumpling wrappers.

According to another aspect of the present disclosure, an automatic dumpling manufacturing system may include a dumpling wrapper supply device that supplies a dumpling wrapper of dough surrounding dumpling stuffing, a dumpling wrapper cutting device disposed adjacent to the dumpling wrapper supply device, and that cuts the dumpling wrapper supplied from the dumpling wrapper supply device into a predetermined unit size, and a dumpling stuffing filling device disposed adjacent to the dumpling wrapper cutting device, and that fills the dumpling stuffing to the dumpling wrapper cut into a specific size through the dumpling wrapper cutting device, the dumpling stuffing filling device may include at least one dumpling stuffing storage and supply hopper that stores and supply dumpling stuffing that is to be supplied to a plurality of dumpling wrappers, a dumpling stuffing supply rotor unit disposed on one side of the dumpling stuffing storage and supply hopper, and that supplies a predetermined quantity of the dumpling stuffing supplied from the dumpling stuffing storage and supply hopper, a plurality of dumpling stuffing delivery units, one side of which is connected to the dumpling stuffing supply rotor unit, and that delivers the predetermined quantity of the dumpling stuffing supplied from the dumpling stuffing supply rotor unit, and a dumpling stuffing discharge unit disposed adjacent to the dumpling stuffing supply rotor unit, to which an opposite side of the dumpling stuffing delivery unit is connected, and that discharges the dumpling stuffing delivered from the dumpling stuffing delivery unit toward the dumpling wrappers in a non-contact manner.

The automatic dumpling manufacturing system may further include a lower side foldable dumpling forming device disposed adjacent to the dumpling stuffing filling device, and that forms a shape of the dumpling by sealing the dumpling wrapper while folding the dumpling wrapper from a lower side thereof when the dumpling stuffing is filled in the dumpling wrapper through the dumpling stuffing filling device.

### [Best Mode]

To sufficiently understand the present disclosure, the advantages of the present disclosure, and the purposes achieved by carrying out the present disclosure, the accompanying drawings illustrating preferred embodiment of the present disclosure, and the contents described in the accompanying drawings should be referenced.

Hereinafter, the present disclosure will be described in detail by describing the preferred embodiments of the present disclosure. The same reference numerals suggested in the drawings denote the same members.

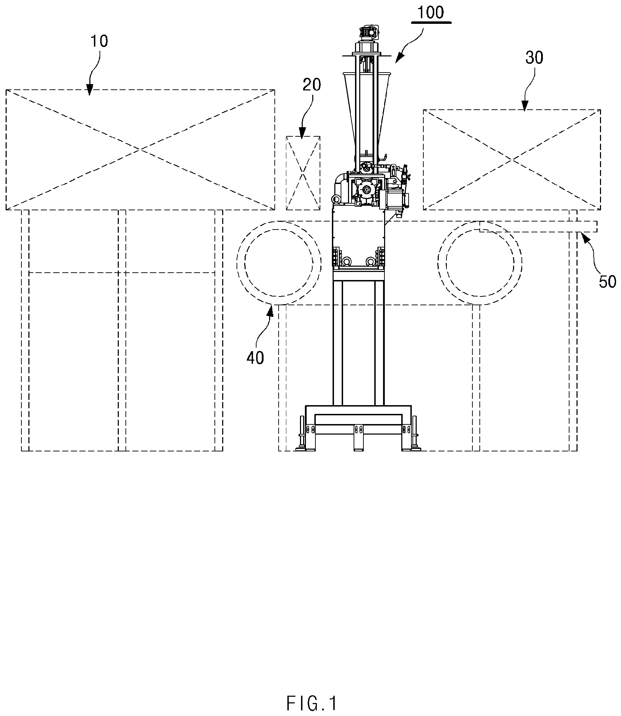

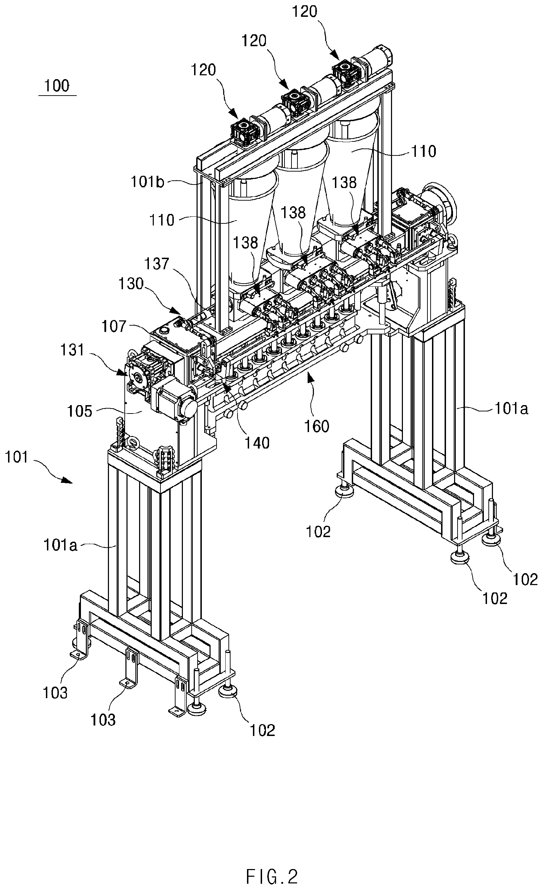

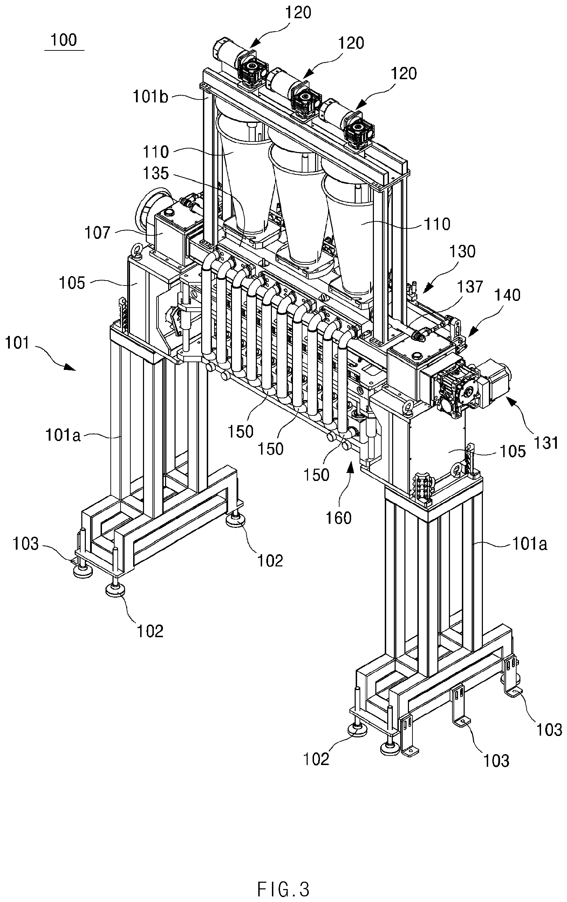

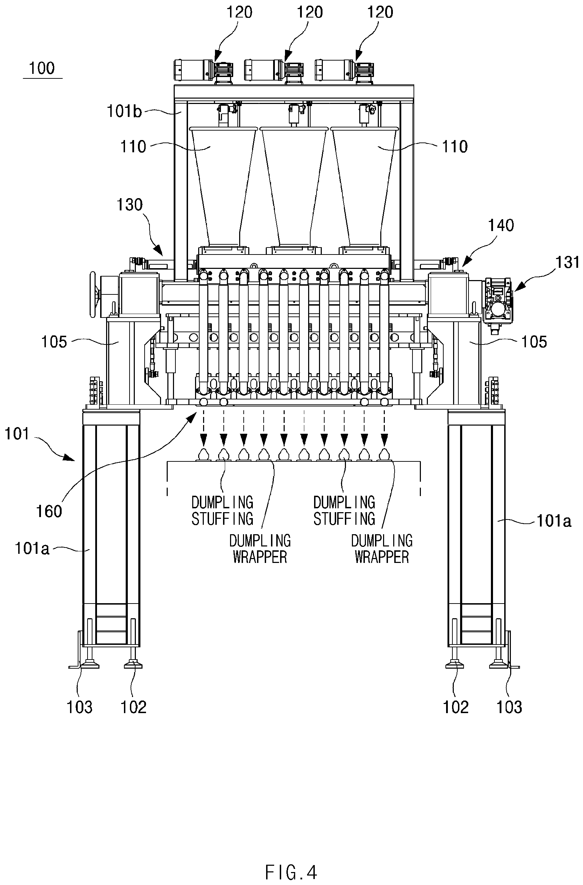

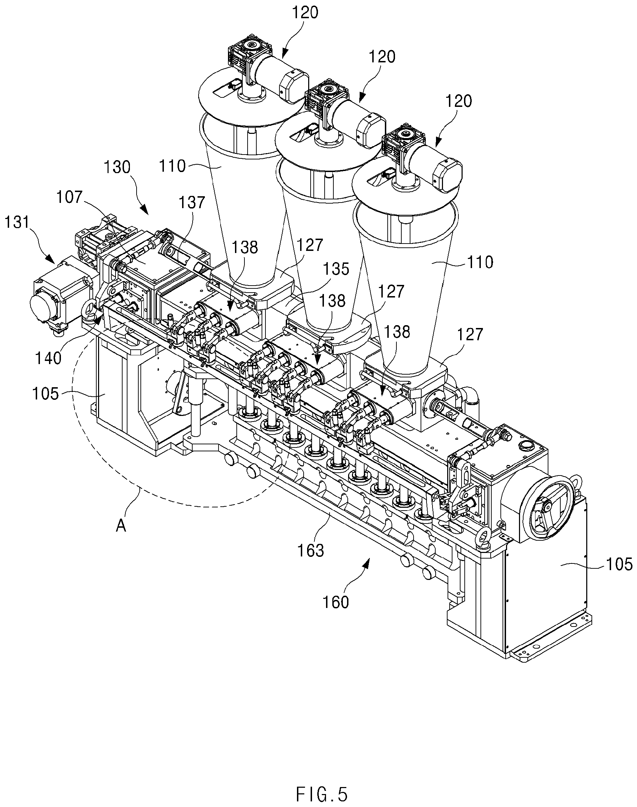

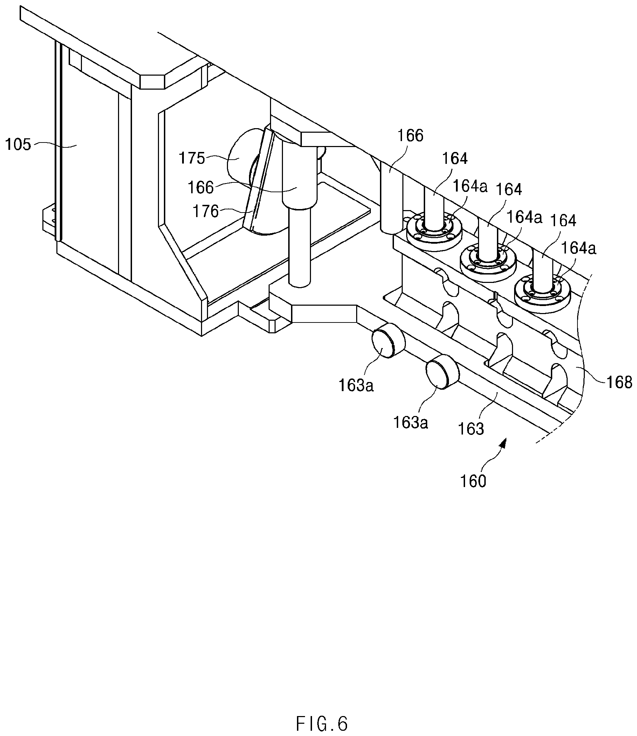

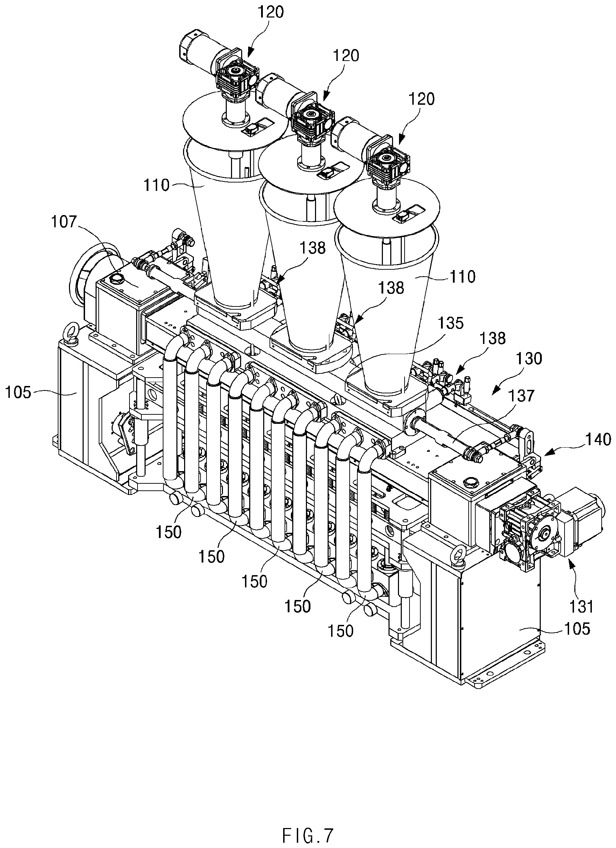

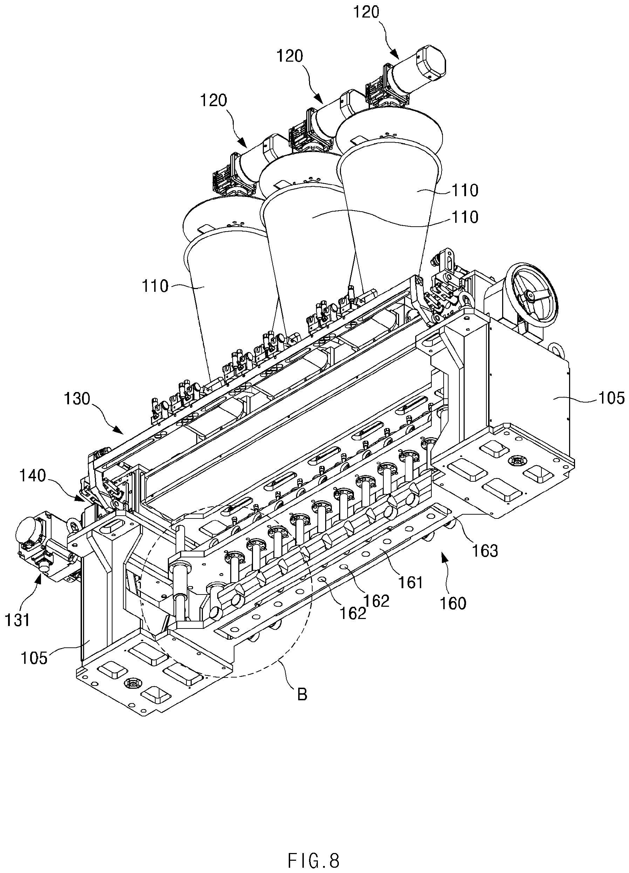

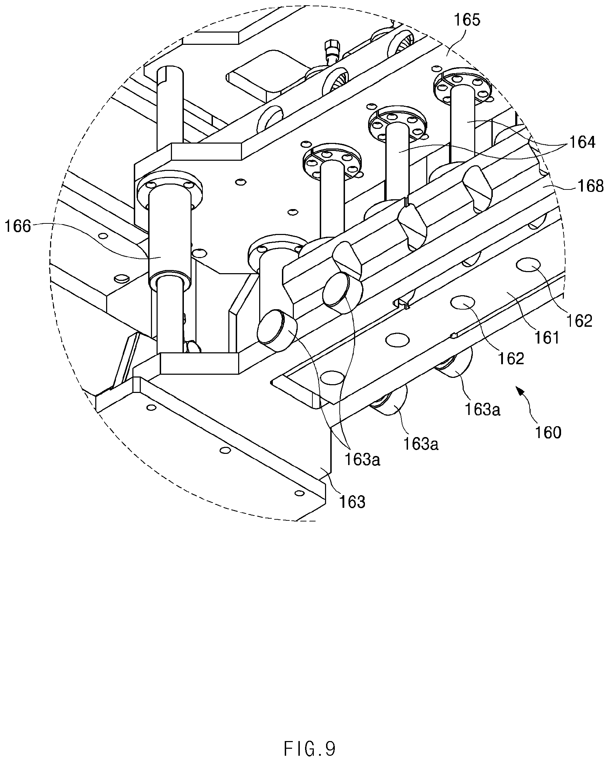

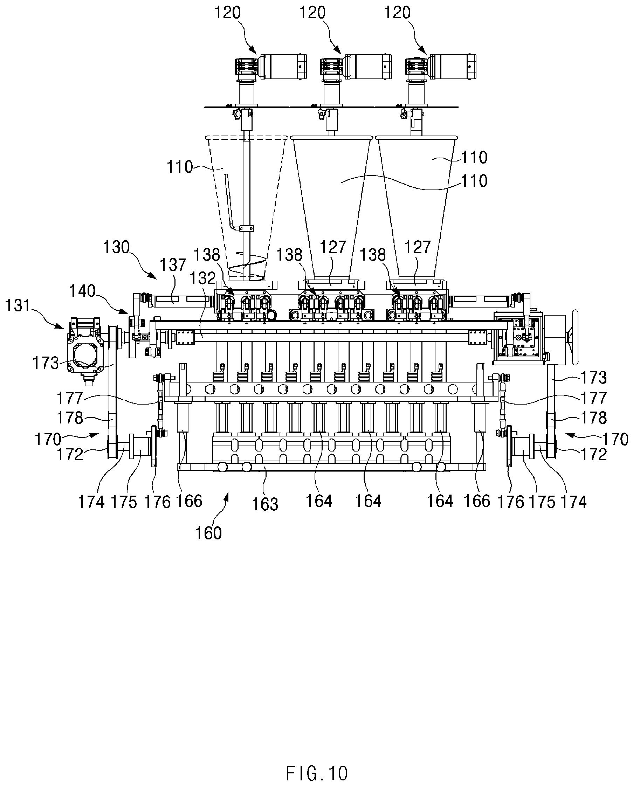

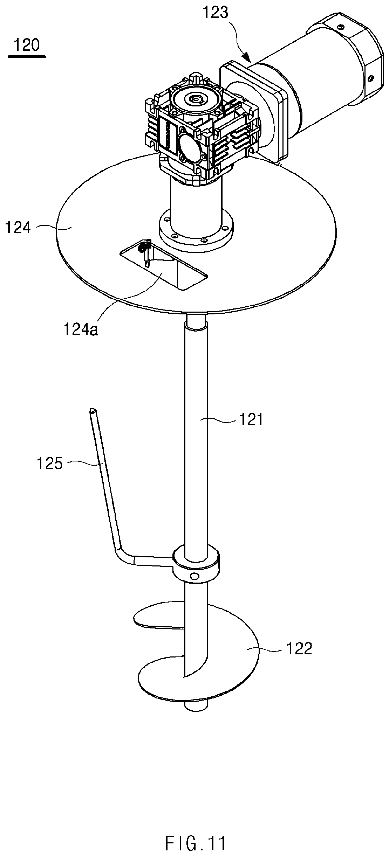

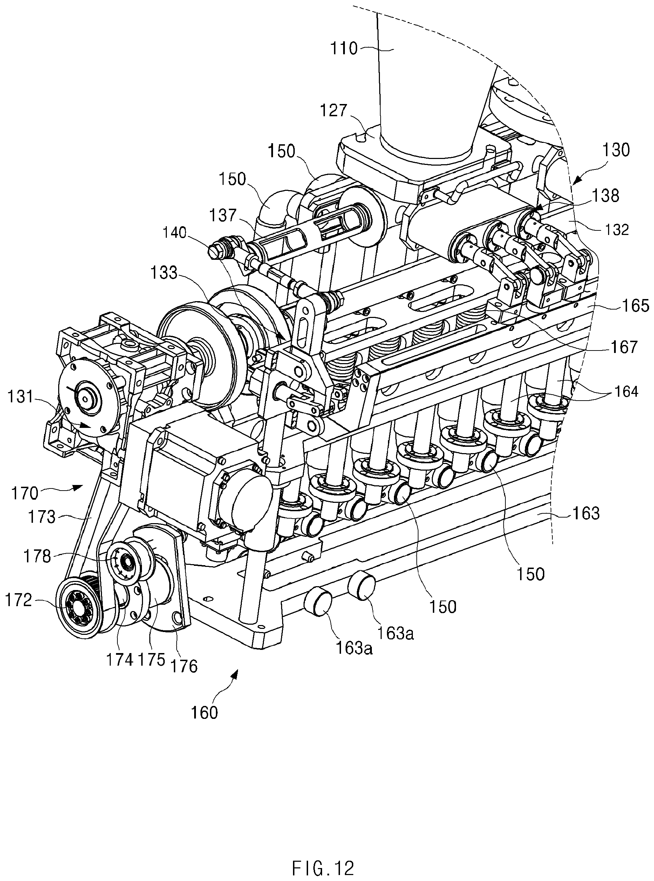

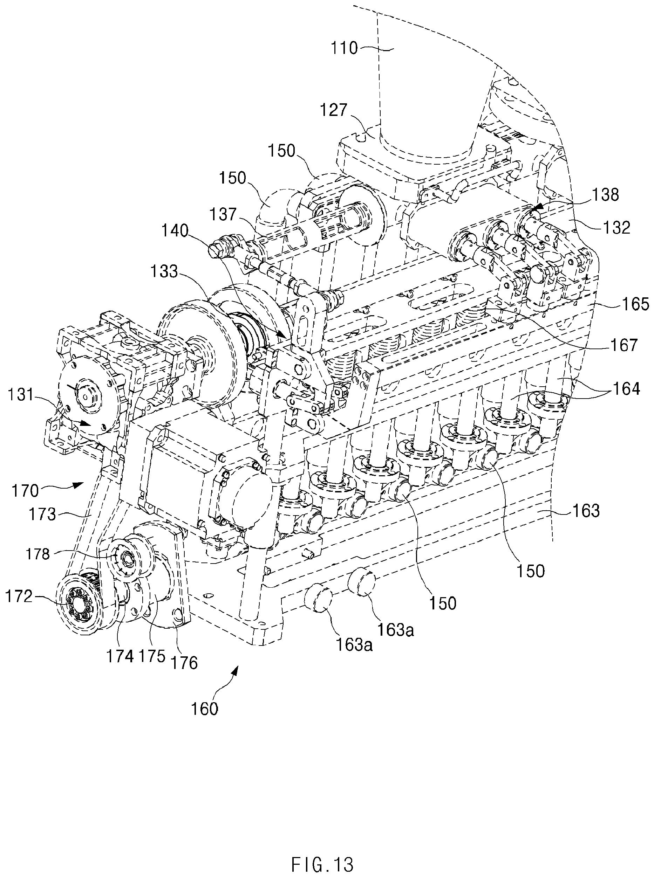

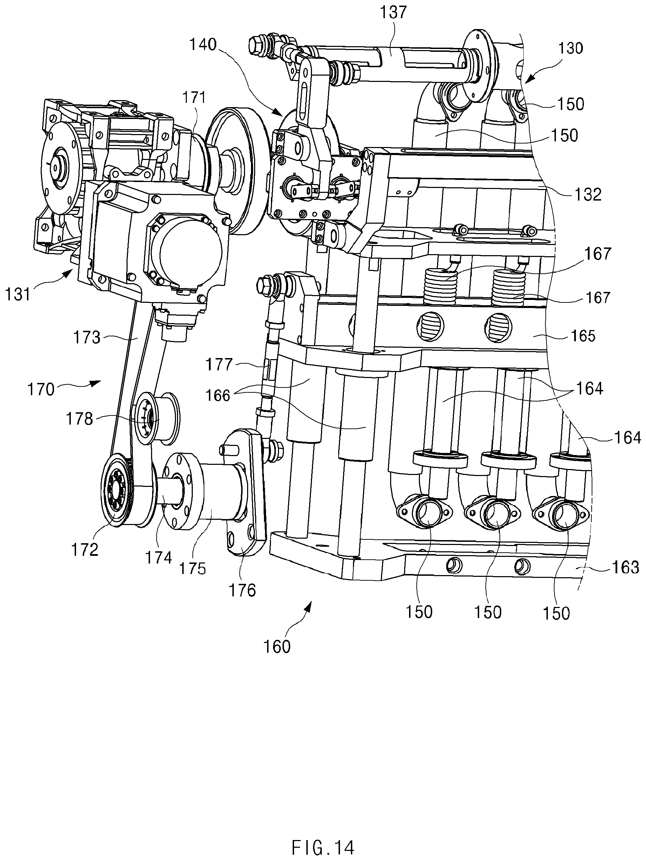

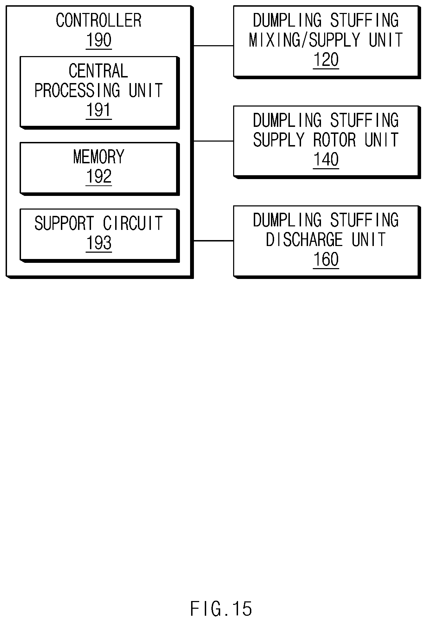

FIG. 1 is a schematic diagram of an automatic dumpling manufacturing system according to an embodiment of the present disclosure, FIG. 2 is a perspective view of a dumpling stuffing filling device according to an embodiment of the present disclosure, FIGS. 3 and 4 are views illustrating FIG. 2 at different angles, FIG. 5 is a view, in which some components are removed from FIG. 3, FIG. 6 is an enlarged view of area "A" of FIG. 5, FIG. 7 is a rear view of FIG. 5, FIG. 8 is a bottom view of FIG. 7, FIG. 9 is an enlarged view of area "B" in FIG. 8, FIG. 10 is a front view of FIG. 7, FIG. 11 is a perspective view of a dumpling stuffing mixing/supply unit, FIG. 12 is an excerpt view of a main part of FIG. 2 for illustrating areas of a dumpling stuffing supply rotor unit and a dumpling stuffing discharge unit, FIG. 13 is a view, in which the remaining areas excluding a cam in FIG. 12 are processed with dotted lines, FIG. 14 is an excerpt view of a main part of FIG. 12 for illustrating the area of the dumpling stuffing discharge unit, and FIG. 15 is a control block diagram of a dumpling stuffing filling device according to an embodiment of the present disclosure.

Referring first to FIG. 1 while the drawings are referenced, an automatic dumpling manufacturing system according to an embodiment may include a dumpling wrapper supply device 10, a dumpling wrapper cutting device 20, a dumpling stuffing filling device 100, a lower side foldable dumpling forming device 30, a movable work bench 40, and a discharge conveyor 50.

The dumpling wrapper supply device 10 serves to supply dough that surrounds dumpling stuffing, that is, a dumpling wrapper. A dumpling wrapper that is not cut into a unit size yet and thus, has a specific thickness and a large area may be supplied toward the dumpling wrapper cutting device 20.

The dumpling wrapper supply device 10 has a continuous feeding structure in a roll-to-roll scheme to supply the dumpling wrapper having the specific thickness and the large area is supplied toward the dumpling stuffing filling device 100. Accordingly, it is considerably advantageous to continuously supply the dumpling wrapper.

The dumpling wrapper cutting device 20 is disposed adjacent to the dumpling wrapper supply device 10, and serves to cut the dumpling wrapper supplied from the dumpling wrapper supply device 10, that is, the dumpling wrapper having the specific thickness and the large area into a predetermined unit size through cutting and send it to the dumpling stuffing filling device 100.

While the dumpling wrapper cut in the dumpling wrapper cutting device 20 is sent to the dumpling stuffing filling device 100 and then is filled with dumpling stuffing, the dumpling wrapper of the marginal parts is fed back to the dumpling wrapper supply device 10 and is reused. Accordingly, the material is not wasted.

Meanwhile, the dumpling stuffing filling device 100 is disposed adjacent to the dumpling wrapper cutting device 20 as described above, and serves to fill the dumpling stuffing into the dumpling wrapper cut to a specific size through the dumpling wrapper cutting device 20.

As briefly described above, the dumpling stuffing filling device 100 according to the embodiment has a compact and efficient structure that is different from a conventional one as will be described later, and thus, allows filling while continuously supplying the dumpling stuffing while not contacting the dumpling wrapper whereby tipping of the dumpling wrapper is prevented and productivity is significantly increased compared to the conventional one.

Furthermore, according to the dumpling stuffing filling device 100 according to the embodiment, the dumpling stuffing may be guided to fall at a predetermined location, and thus, sealing and shape defects may be reduced.

The lower side foldable dumpling forming device 30 is disposed adjacent to the dumpling stuffing filling device 100, and serves to form a dumpling shape by sealing the dumpling wrapper while folding it from a lower side when the dumpling stuffing is filled in the dumpling wrapper through the dumpling stuffing filling device 100. Dumplings of various shapes may be made by changing the structure of the lower side foldable dumpling forming device 30.

The movable work bench 40 serves as a work bench that seals the dumpling wrapper and forms the dumpling shape, in a scheme of filling the dumpling wrapper with the dumpling stuffing and the dumpling wrapper is folded from the lower side.

Furthermore, the discharge conveyor 50 serves to discharge a final product made through the above process, that is, dumpling.

Process devices that measure the dumpling and inspects a defect and packages the final product, on which the inspection has been performed, may be provided at a rear end of the discharge conveyor 50, and the case, in which the process devices are included, will also pertain to the scope of the present disclosure.

Meanwhile, as described above, the dumpling stuffing filling device 100 performs a series of dumpling stuffing filling processes of filling the dumpling wrapper with the dumpling stuffing.

According to the dumpling stuffing filling device 100 according to the embodiment, the dumpling stuffing can be continuously supplied and filled while not contacting the dumpling wrapper, and thus, the tipping of the dumpling wrapper may be prevented and productivity may be significantly increased compared to the conventional one, and the dumpling stuffing can be guided to fall at a predetermined location, and thus, seal and shape defects thereof may be reduced.

The dumpling stuffing filling device 100 according to the embodiment that may provide this effect includes a device frame 101, and a dumpling stuffing storage and supply hopper 110, a dumpling stuffing supply rotor unit 130, a dumpling stuffing delivery unit 150, and a dumpling stuffing discharge unit 160 are mounted on the device frame 101 for the locations thereof.

The device frame 101 is an exterior structure of the dumpling stuffing filling device 100 according to the embodiment, and supports the dumpling stuffing storage and supply hopper 110, the dumpling stuffing supply rotor unit 130, the dumpling stuffing delivery unit 150, and the dumpling stuffing discharge unit 160.

The device frame 101 includes a bridge structure 101a and a hopper supporter 101b. The bridge structure 101a is a structure that supports the dumpling stuffing storage and supply hopper 110, the dumpling stuffing supply rotor unit 130, the dumpling stuffing delivery unit 150, and the dumpling stuffing discharge unit 160 while they are spaced upward apart from an installation surface. The bridge structure 101a may be manufactured by welding and bolting a metal frame for strength. To move and stop the bridge structure 101a, a wheel 102 and a stopper foot 103 are provided at a lower end of the bridge structure 101a.

The hopper supporter 101b is a structure that is built at an upper portion of the bridge structure 101a, and supports the dumpling stuffing storage and supply hopper 110. Because a dumpling stuffing mixing/supply unit 120 is installed in the dumpling stuffing storage and supply hopper 110, it is especially used as a means for supporting the dumpling stuffing mixing/supply unit 120.

The dumpling stuffing storage and supply hopper 110 becomes a place for storing and supplying the dumpling stuffing that is to be supplied to a plurality of dumpling wrappers. The dumpling stuffing storage and supply hopper 110 may be applied in a form, in which a cross-sectional area thereof becomes gradually smaller as it goes downward.

In the embodiment, a plurality of, for example, three dumpling stuffing storage and supply hoppers 110 are provided, and the dumpling stuffing supply rotor unit 130, the dumpling stuffing delivery unit 150, and the dumpling stuffing discharge unit 160 are provided to correspond to the plurality of dumpling stuffing storage and supply hoppers 110. Accordingly, for example, a total of ten dumpling stuffings may be supplied in one operation, and thus, productivity may be improved. Of course, this value does not limit the scope of the present disclosure.

The dumpling stuffing mixing/supply unit 120 is connected to the dumpling stuffing storage and supply hopper 110. As illustrated in detail in FIGS. 10 and 11, the dumpling stuffing mixing/supply unit 120 are provided in each of the dumpling stuffing storage and supply hoppers 110, and serves to cause the dumpling stuffing in the dumpling stuffing storage and supply hopper 110 to fall to be supplied while being mixed.

The dumpling stuffing mixing/supply unit 120 may include a mixing shaft 121 that is rotatably disposed in the dumpling stuffing storage and supply hopper 110, a spiral wing part 122 that is connected to a lower area of the mixing shaft 121 and causes the dumpling stuffing in the dumpling stuffing storage and supply hopper 110 to fall while being mixed, and a shaft rotation driving part 123 that is provided on an outside of the dumpling stuffing storage and supply hopper 110 and is connected to the mixing shaft 121 to rotate the mixing shaft 121. The shaft rotation driving part 123 may be implemented as a combination of a motor and a reducer.

Furthermore, the dumpling stuffing mixing/supply unit 120 further includes a mixing bar 125. The mixing bar 125 is a nonlinear bar configuration. The mixing bar 125 is connected to the mixing shaft 121 in the dumpling stuffing storage and supply hopper 110, and mixes the dumpling stuffing in the dumpling stuffing storage and supply hopper 110 while being rotated together with the rotation of the mixing shaft 121.

A spattering preventing plate 124 that prevents the dumpling stuffing in the dumpling stuffing storage and supply hopper 110 from spattering is provided at an upper portion of the dumpling stuffing storage and supply hopper 110. The spattering preventing plate 124 is disposed to be spaced apart upward from the dumpling stuffing storage and supply hopper 110. A through-hole 124a is formed in the spattering preventing plate 124.

Accordingly, when the dumpling stuffing mixing/supply unit 120 is operated while the dumpling stuffing is accommodated in the dumpling stuffing storage and supply hopper 110, the dumpling stuffing may be uniformly mixed through an action of the spiral wing part 122 and the mixing bar 125, and the dumpling stuffing may be supplied into a rotor unit body 135 of the dumpling stuffing supply rotor unit 130 by the predetermined quantity through a lower discharge guide duct 127 while falling.

The dumpling stuffing supply rotor unit 130 is a device that is connected to the discharge guide duct 127 provided at a lower portion of the dumpling stuffing storage and supply hopper 110, and serves to supply a predetermined quantity of the dumpling stuffing provided from the dumpling stuffing storage and supply hopper 110, to the dumpling stuffing delivery unit 150.

In other words, the dumpling stuffing supply rotor unit 130 is disposed on one side of the dumpling stuffing storage and supply hopper 110, and serves to supply the dumpling stuffing supplied from the dumpling stuffing storage and supply hopper 110, to the dumpling stuffing delivery unit 150, by the predetermined quantity.

For reference, as will be described later, the dumpling stuffing discharge unit 160 serves to discharge the dumpling stuffing delivered from the dumpling stuffing delivery unit 150 toward the dumpling wrapper in a non-contact manner, and because the dumpling stuffing supply rotor unit 130 and the dumpling stuffing discharge unit 160 are electric devices that require a driving force, a means for providing the driving force is required.

Originally, there are two devices, and thus, means for driving the dumpling stuffing supply rotor unit 130 and the dumpling stuffing discharge unit 160, respectively, are needed, but in the embodiment, a common driving motor 131 is applied for structural simplification.

That is, the dumpling stuffing supply rotor unit 130 includes a common driving motor 131 for synchronously driving the dumpling stuffing supply rotor unit 130 and the dumpling stuffing discharge unit 160 in common to discharge the dumpling stuffing toward the dumpling wrapper by a predetermined quantity and at a predetermined location. Then, because the common driving motor 131 is applied as a servo motor, a control may be made accurate by a device controller 190.

Furthermore, the dumpling stuffing supply rotor unit 130 further includes a common rotating shaft 132 that is connected to the common driving motor 131 and is rotated by the driving force of the common driving motor 131. For reference, although the common driving motor 131 is a servo motor, a state, in which the reducer is connected to the servo motor, is referred to as the common driving motor 131.

In the embodiment, the dumpling stuffing supply rotor unit 130 includes a rotor unit body 135 that is connected to a lower portion of the dumpling stuffing storage and supply hopper 110, and stores the predetermined quantity of the dumpling stuffing that falls from the dumpling stuffing storage and supply hopper 110, a rotor shaft 137, one side of which is disposed in the rotor unit body 135, an opposite side of which is exposed to an outside of the rotor unit body 135, and that causes the dumpling stuffing to fall from the dumpling stuffing storage and supply hopper 110 into the rotor unit body 135 by the predetermined quantity while being rotated, a dumpling stuffing pusher 138 that is provided on one side of the rotor unit body 135, and pushes the dumpling stuffing in the rotor unit body 135 to the dumpling stuffing delivery unit 150, and a link type motion driving body 140 that is connected to the common rotating shaft 132, the rotor shaft 137, and the dumpling stuffing pusher 138 in a link manner, and transmits a rotation motion of the common rotating shaft 132 as a rotation or pushing motion of the rotor shaft 137 and the dumpling stuffing pusher 138.

Then, a cam 133 is integrally coupled to the common rotating shaft 132, and the link type motion driving body 140 is connected to the cam 133 to interlock with the rotation of the cam 133. Because the link type motion driving body 140 is driven by the cam 133, the structure is simpler than the conventional one, and rust may be prevented because only oil needs to be supplied to a gear box 107.

Accordingly, when the common rotating shaft 132 is rotated due to the action of the common driving motor 131, the link type motion driving body 140 is operated due to the action of the cam 133 connected thereto. Then, by the link type motion driving body 140 having several links, bars, joints, and the like, the rotor shaft 137 is rotated while the dumpling stuffing pusher 138 is operated. Then, the dumpling stuffing that has fallen from the dumpling stuffing storage and supply hopper 110 into the rotor unit body 135 by the predetermined quantity may be delivered to the dumpling stuffing delivery unit 150.

The dumpling stuffing delivery unit 150 is configured so that one side thereof is connected to the dumpling stuffing supply rotor unit 130 and an opposite side thereof is connected to the dumpling stuffing discharge unit 160, and serves to deliver a predetermined quantity of dumpling stuffing supplied from the dumpling stuffing supply rotor unit 130 to the dumpling stuffing discharge unit 160.

In the embodiment, opposite ends of the dumpling stuffing delivery unit 150 take the form of bent pipes to be connected to the dumpling stuffing supply rotor unit 130 and the dumpling stuffing discharge unit 160. As described above, in the embodiment, the pipe-shaped dumpling stuffing delivery unit 150 supplies ten pieces of dumpling stuffing at a time in one operation, and corresponds to ten dumpling stuffing delivery units. Of course, this value does not limit the scope of the present disclosure. That is, the number of the dumpling stuffing delivery units 150 may be less than or more than ten.

Meanwhile, the dumpling stuffing discharge unit 160 is disposed adjacent to the dumpling stuffing supply rotor unit 130, is configured such that the opposite side of the dumpling stuffing delivery unit 150 is connected thereto, and serves to discharge the dumpling stuffing delivered from the dumpling stuffing delivery unit 150, toward the dumpling wrapper, in a non-contact manner.

Because the dumpling stuffing may be discharged toward the dumpling wrapper in a non-contact manner through the dumpling stuffing discharge unit 160 of an efficient structure, it is possible to prevent the tipping of the dumpling wrapper. In addition, because the dumpling stuffing may be guided to fall at the predetermined location, sealing and shape defects may be reduced.

The dumpling stuffing discharge unit 160 that may provide the effect may include a dumpling stuffing discharge plate 161 including a plurality of dumpling stuffing discharge holes 162, from which the dumpling stuffing is discharged, a discharge plate support member 163 that detachably supports the dumpling stuffing discharge plate 161, a plurality of pistons 164 that is provided at an upper portion of the dumpling stuffing discharge plate 161 to be driven up and down, and causes the dumpling stuffing delivered from the dumpling stuffing delivery unit 150 to fall through a dumpling stuffing discharge hole 162, a piston support up/down slider 165 that integrally supports the plurality of pistons 164, and is driven up and down together with the pistons 164, and a pair of motion transmitting parts 170.

The dumpling stuffing discharge plate 161 is detachably connected to the discharge plate support member 163. For this purpose, a discharge plate fastening member 163a is provided in the discharge plate support member 163. The operation becomes simpler by unscrewing the discharge plate fastening member 163 a, separating the dumpling stuffing discharge plate 161 for maintenance or cleaning, and then reinstalling it.

A piston sealing member 164a is connected to a piston 164. Accordingly, even though the process of filling the dumpling stuffing by pushing it out while the piston 164 is driven up and down, water leakage in the area of the piston 164 is prevented. Accordingly, there may be no pollution or it may be significantly reduced compared to the conventional one.

Furthermore, in the embodiment, a piston guide duct 168 is provided at a lower portion of the pistons 164. Actually, the dumpling stuffing delivered from the dumpling stuffing delivery unit 150 is directed toward the piston guide duct 168, and then may fall and be discharged by the predetermined quantity through the dumpling stuffing discharge hole 162 due to the action of the pistons 164 that enter and exit from the piston guide duct 168.

To guide the up/down movement of the piston 164, a plurality of up/down guides 166 are provided in the dumpling stuffing discharge unit 160. The up/down guides 166 are connected to the discharge plate support member 163 and the piston support up/down slider 165, and serve to guide the up/down motion of the piston support up/down slider 165.

Furthermore, the dumpling stuffing discharge unit 160 further includes a plurality of elastic members 167. The elastic members 167 are connected to the piston support up/down slider 165 and provide an elastic force to return the piston support up/down slider 165 to an original location. The elastic members 167 are connected to the pistons 164 one by one.

The pair of motion transmitting parts 170 are connected to the common rotating shaft 132 and the piston support up/down slider 165 on opposite sides of the common rotating shaft 132, respectively, and serves to transmit a rotation motion of the common rotating shaft 132 as a vertical up/down motion of the piston support up/down slider 165.

In the embodiment, the structures of the pair of motion transmitting parts 170 are the same. Accordingly, installation or maintenance may be made easy, and a stable operation of the pistons 164 may be achieved. Furthermore, because it is difficult for a motion transmitting part 170 to be exposed to the outside, the motion transmitting part 170 is installed hidden in a casing 105. Of course, for maintenance of the motion transmitting part 170, the casing 105 is configured to be disassembled and assembled.

Each of the pair of motion transmitting parts 170 includes a driving pulley 171 that is coupled to the common rotating shaft 132, and is rotated with the common rotating shaft 132, a driven pulley 172 that is disposed to be spaced apart from the driving pulley 171, a belt 173 that connects the driving pulley 171 and the driven pulley 172, a pulley shaft 174 that is shaft-coupled to a rotation center of the driven pulley 172, a shaft boss 175 that is coupled to the pulley shaft 174, a boss rotating plate 176 that has an area being larger than that of the shaft boss 175, and is coupled to the shaft boss 175 to be rotated together with the shaft boss 175, and a link member 177.

At this time, the link member 177 is configured such that one side thereof is rotatably coupled to an eccentric location that is eccentric to one side from a center of the boss rotating plate 176 and an opposite side thereof rotatably coupled to the piston support up/down slider 165, and serves to transmit a rotation motion of the boss rotating plate 176 as an up/down motion of the piston support up/down slider 165.

A tension guide 178 is connected to the belt 173. The tension guide 178 is connected to the belt 173 in a form that supports the belt 173 to guide the belt 173 such that it is tensioned.

Meanwhile, the dumpling stuffing filling device 100 according to the embodiment is further equipped with the device controller 190 that controls the device such that the device continuously supplies and fills the dumpling stuffing while not contacting the dumpling wrapper.

The device controller 190 applied to the embodiment serves to control operations of the dumpling stuffing mixing/supply unit 120, the dumpling stuffing supply rotor unit 130, and the dumpling stuffing discharge unit 160 such that they continuously supply and fill the dumpling stuffing while not contacting the dumpling wrapper.

The device controller 190 that performs the role may include a central processing unit 191, a memory 192, and a support circuit 193.

In the embodiment, the central processing unit 191 may be one of various computer processors that may be industrially applicable to control an operation of a protection window sliding unit 140 so that the protection window is operated by stages based on a detection signal of a detection unit 170.

The memory 192 is connected to the central processing unit 191. The memory 192 is a computer-readable recording medium and may be installed locally or remotely, and for example, may be at least one easily available memory, such as a random access memory (RAM), an ROM, a floppy disk, a hard disk, or any other form of digital storage.

The support circuit 193 is combined with the central processing unit 191 to support typical operations of the processor. The support circuit 193 may include a cache, a power supply, a clock circuit, an input/output circuit, and a sub-system.

In the embodiment, the device controller 190 controls the operation of the protection window sliding unit 140 so that the protection window is operated by stages based on the detection signal from the detection unit 170. Then, a series of processes of the device controller 190 controlling the operation of the protection window sliding unit 140 so that the protection window is operated by stages based on the detection signal from the detection unit 170, may be stored in the memory 192. Typically, software routines may be stored in the memory 192. The software routines may also be stored or executed by other central processing units (not illustrated).

Although it has been described that the processes according to the present disclosure is executed by the software routines, it is also possible that at least some of the processes according to the present disclosure are performed by hardware. In this way, the processes of the present disclosure may be implemented as software that runs on a computer system, as hardware, such as an integrated circuit, or as a combination of software and hardware.

By the configuration, when the operations of the dumpling stuffing mixing/supply unit 120, the dumpling stuffing supply rotor unit 130, and the dumpling stuffing discharge unit 160 are controlled through the control of the device controller 190, the dumpling stuffing in the dumpling stuffing storage and supply hopper 110 is delivered to the dumpling stuffing delivery unit 150 by the action of the dumpling stuffing supply rotor unit 130, and then, may fall downward due to the operation of the piston 164 of the dumpling stuffing discharge unit 160. At this time, in the embodiment, because the dumpling stuffing may be discharged toward the dumpling wrapper in a non-contact manner, it is possible to prevent the tipping of the dumpling wrapper. In addition, because the dumpling stuffing may be guided to fall at the predetermined location, sealing and shape defects may be reduced.

According to the embodiment that acts with the above-described structure, the dumpling stuffing can be continuously supplied and filled while not contacting the dumpling wrapper, and thus, the tipping of the dumpling wrapper may be prevented and productivity may be significantly increased compared to the conventional one, and the dumpling stuffing can be guided to fall at a predetermined location, and thus, seal and shape defects thereof may be reduced.

In this way, the present disclosure is not limited to the described embodiments, and it is obvious to those skilled in the art that various modifications and changes may be made without departing from the spirit and scope of the present disclosure. Therefore, such modifications or variations will fall within the scope of the claims of the present disclosure.

### [Industrial Applicability]

The present disclosure may be used for a facility or a system for manufacturing dumpling.

## Claims

1. A dumpling stuffing filling device comprising:
a dumpling stuffing storage and supply hopper configured to store and supply dumpling stuffing that is to be supplied to a plurality of dumpling wrappers;
a dumpling stuffing supply rotor unit disposed on one side of the dumpling stuffing storage and supply hopper, and configured to supply a predetermined quantity of the dumpling stuffing supplied from the dumpling stuffing storage and supply hopper;
a plurality of dumpling stuffing delivery units, one side of which is connected to the dumpling stuffing supply rotor unit, and configured to deliver the predetermined quantity of the dumpling stuffing supplied from the dumpling stuffing supply rotor unit; and
a dumpling stuffing discharge unit disposed adjacent to the dumpling stuffing supply rotor unit, to which an opposite side of the dumpling stuffing delivery unit is connected, and configured to discharge the dumpling stuffing delivered from the dumpling stuffing delivery unit toward the dumpling wrappers in a non-contact manner.

2. The dumpling stuffing filling device of claim 1, wherein the dumpling stuffing supply rotor unit includes:
a common driving motor for synchronously driving the dumpling stuffing supply rotor unit and the dumpling stuffing discharge unit in common to discharge the dumpling stuffing toward the dumpling wrappers by the predetermined quantity or at predetermined locations.

3. The dumpling stuffing filling device of claim 2, wherein the common driving motor is a servo motor, and
wherein the dumpling stuffing supply rotor unit further includes a common rotating shaft connected to the common driving motor and being rotated by a driving force of the common driving motor.

4. The dumpling stuffing filling device of claim 3, wherein the dumpling stuffing supply rotor unit includes:
a rotor unit body connected to a lower portion of the dumpling stuffing storage and supply hopper, and configured to store the predetermined quantity of the dumpling stuffing falling from the dumpling stuffing storage and supply hopper;
a rotor shaft, one side of which is disposed in the rotor unit body, an opposite side of which is exposed to an outside of the rotor unit body, and configured to cause the dumpling stuffing to fall from the dumpling stuffing storage and supply hopper into the rotor unit body by the predetermined quantity while being rotated;
a dumpling stuffing pusher provided on one side of the rotor unit body, and configured to push the dumpling stuffing in the rotor unit body to the dumpling stuffing delivery unit; and
a link type motion driving body connected to the common rotating shaft, the rotor shaft, and the dumpling stuffing pusher in a link manner, and configured to transmit a rotation motion of the common rotating shaft as a rotation or pushing motion of the rotor shaft and the dumpling stuffing pusher.

5. The dumpling stuffing filling device of claim 4, wherein a cam is integrally coupled to the common rotating shaft, and the link type motion driving body is connected to the cam to interlock with rotation of the cam.

6. The dumpling stuffing filling device of claim 3, wherein the dumpling stuffing discharge unit includes:
a dumpling stuffing discharge plate including a plurality of dumpling stuffing discharge holes, from which the dumpling stuffing is discharged;
a discharge plate support member configured to detachably support the dumpling stuffing discharge plate;
a plurality of pistons provided at an upper portion of the dumpling stuffing discharge plate to be driven up and down, and configured to cause the dumpling stuffing delivered from the dumpling stuffing delivery unit to fall through the dumpling stuffing discharge hole;
a piston support up/down slider configured to integrally support the plurality of pistons, and driven up and down together with the pistons; and
a pair of motion transmitting parts connected to the common rotating shaft and the piston support up/down slider on opposite sides of the common rotating shaft, respectively, and configured to transmit a rotation motion of the common rotating shaft as a vertical up/down motion of the piston support up/down slider.

7. The dumpling stuffing filling device of claim 6, wherein the pair of motion transmitting parts have the same structure.

8. The dumpling stuffing filling device of claim 7, wherein each of the pair of motion transmitting parts includes:
a driving pulley coupled to the common rotating shaft, and being rotated with the common rotating shaft;
a driven pulley disposed to be spaced apart from the driving pulley;
a belt connecting the driving pulley and the driven pulley;
a pulley shaft shaft-coupled to a rotation center of the driven pulley;
a shaft boss coupled to the pulley shaft;
a boss rotating plate having an area being larger than that of the shaft boss, and coupled to the shaft boss to be rotated together with the shaft boss; and
a link member, one side of which is rotatably coupled to an eccentric location being eccentric to one side from a center of the boss rotating plate, an opposite side of which is rotatably coupled to the piston support up/down slider, and configured to transmit a rotation motion of the boss rotating plate as an up/down motion of the piston support up/down slider.

9. The dumpling stuffing filling device of claim 8, wherein each of the pair of motion transmitting parts further includes:
a tension guide connected to the belt and configured to guide the belt such that the belt is tensioned.

10. The dumpling stuffing filling device of claim 6, wherein the dumpling stuffing discharge unit further includes:
a plurality of up/down guides connected to the discharge plate support member and the piston support up/down slider, and configured to guide an up/down motion of the piston support up/down slider.

11. The dumpling stuffing filling device of claim 10, wherein the dumpling stuffing discharge unit further includes:
a plurality of elastic members connected to the piston support up/down slider, and configured to provide an elastic force for returning the piston support up/down slider to an original location.

12. The dumpling stuffing filling device of claim 1, wherein a plurality of dumpling stuffing storage and supply hoppers are provided, and a dumpling stuffing mixing/supply unit configured to cause the dumpling stuffing in the dumpling stuffing storage and supply hopper to fall to be supplied while being mixed is provided in each of the dumpling stuffing storage and supply hopper.

13. The dumpling stuffing filling device of claim 12, wherein the dumpling stuffing mixing/supplying unit includes:
a mixing shaft rotatably disposed in the dumpling stuffing storage and supply hopper;
a spiral wing part connected to a lower area of the mixing shaft, and configured to cause the dumpling stuffing in the dumpling stuffing storage and supply hopper to fall while being mixed; and
a shaft rotation driving part provided on an outside of the dumpling stuffing storage and supply hopper, connected to the mixing shaft, and configured to rotate the mixing shaft.

14. The dumpling stuffing filling device of claim 13, wherein the dumpling stuffing mixing/supplying unit further includes:
a spattering preventing plate disposed at an upper portion of the dumpling stuffing storage and supply hopper, and configured to prevent the dumpling stuffing in the dumpling stuffing storage and supply hopper from spattering; and
a nonlinear mixing bar connected to the mixing shaft in the dumpling stuffing storage and supply hopper, and configured to mix the dumpling stuffing in the dumpling stuffing storage and supply hopper while being rotated together with the mixing shaft when the mixing shaft is rotated.

15. The dumpling stuffing filling device of claim 12, further comprising:
a device controller configured to control operations of the dumpling stuffing mixing/supply unit, the dumpling stuffing supply rotor unit, and the dumpling stuffing discharge unit such that the dumpling stuffing mixing/supply unit, the dumpling stuffing supply rotor unit, and the dumpling stuffing discharge unit continuously supply and fill the dumpling stuffing while not contacting the dumpling wrappers.

16. An automatic dumpling manufacturing system comprising:
a dumpling wrapper supply device configured to supply a dumpling wrapper of dough surrounding dumpling stuffing;
a dumpling wrapper cutting device disposed adjacent to the dumpling wrapper supply device, and configured to cut the dumpling wrapper supplied from the dumpling wrapper supply device into a predetermined unit size; and
a dumpling stuffing filling device disposed adjacent to the dumpling wrapper cutting device, and configured to fill the dumpling stuffing to the dumpling wrapper cut into a specific size through the dumpling wrapper cutting device,
wherein the dumpling stuffing filling device includes:
at least one dumpling stuffing storage and supply hopper configured to store and supply dumpling stuffing that is to be supplied to a plurality of dumpling wrappers;
a dumpling stuffing supply rotor unit disposed on one side of the dumpling stuffing storage and supply hopper, and configured to supply a predetermined quantity of the dumpling stuffing supplied from the dumpling stuffing storage and supply hopper;
a plurality of dumpling stuffing delivery units, one side of which is connected to the dumpling stuffing supply rotor unit, and configured to deliver the predetermined quantity of the dumpling stuffing supplied from the dumpling stuffing supply rotor unit; and
a dumpling stuffing discharge unit disposed adjacent to the dumpling stuffing supply rotor unit, to which an opposite side of the dumpling stuffing delivery unit is connected, and configured to discharge the dumpling stuffing delivered from the dumpling stuffing delivery unit toward the dumpling wrappers in a non-contact manner.

17. The automatic dumpling manufacturing system of claim 16, further comprising:
a lower side foldable dumpling forming device disposed adjacent to the dumpling stuffing filling device, and configured to form a shape of the dumpling by sealing the dumpling wrapper while folding the dumpling wrapper from a lower side thereof when the dumpling stuffing is filled in the dumpling wrapper through the dumpling stuffing filling device.
